(19) Europäisches Patentamt
European Patent Office
Office européen des brevets

(11) **EP 2 862 309 B1**

(12) **FASCICULE DE BREVET EUROPEEN**

(45) Date de publication et mention
de la délivrance du brevet:
**02.03.2016 Bulletin 2016/09**

(51) Int Cl.:
**H04L 9/32** (2006.01)  **G06K 9/00** (2006.01)
**H04L 29/06** (2006.01)

(21) Numéro de dépôt: **13729709.9**

(22) Date de dépôt: **17.06.2013**

(86) Numéro de dépôt international:
**PCT/EP2013/062503**

(87) Numéro de publication internationale:
**WO 2013/189881 (27.12.2013 Gazette 2013/52)**

(54) **PROCÉDÉ DE TRAITEMENT DE DONNÉES SÉCURISÉ**

VERFAHREN ZUR SICHEREN DATENVERARBEITUNG

METHOD OF SECURE DATA PROCESSING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.06.2012 FR 1255670**

(43) Date de publication de la demande:
**22.04.2015 Bulletin 2015/17**

(73) Titulaire: **Morpho**
**92130 Issy-les-Moulineaux (FR)**

(72) Inventeurs:
• **PATEY, Alain**
**F-92130 Issy Les Moulineaux (FR)**
• **CHABANNE, Hervé**
**F-92130 Issy Les Moulineaux (FR)**
• **BRINGER, Julien**
**F-92130 Issy Les Moulineaux (FR)**

(74) Mandataire: **Regimbeau**
**20, rue de Chazelles**
**75847 Paris Cedex 17 (FR)**

(56) Documents cités:
**US-A1- 2010 100 724**

• **MARINA BLANTON ET AL: "Secure and Efficient
Protocols for Iris and Fingerprint Identification",
INTERNATIONAL ASSOCIATION FOR
CRYPTOLOGIC RESEARCH,, vol.
20110917:024955, 17 septembre 2011
(2011-09-17), pages 1-25, XP061004601, cité dans
la demande**
• **C. CASTELLUCCIA ET AL: "Efficient aggregation
of encrypted data in wireless sensor networks",
THE SECOND ANNUAL INTERNATIONAL
CONFERENCE ON MOBILE AND UBIQUITOUS
SYSTEMS: NETWORKING AND SERVICES, 1
janvier 2005 (2005-01-01), pages 109-117,
XP055017676, DOI:
10.1109/MOBIQUITOUS.2005.25**

**Description**

DOMAINE DE L'INVENTION

L'invention concerne les traitements sécurisés de données détenues par un client et un serveur, du type dans lesquels ni le client, ni le serveur n'obtient d'informations sur les données de l'autre.

L'invention est applicable aux procédés d'identification biométrique sécurisés mettant en oeuvre des comparaisons par calcul de la distance de Hamming, et notamment aux procédés d'identification par comparaison d'iris.

ETAT DE LA TECHNIQUE

La distance de Hamming entre deux codes binaires est un concept mathématique bien connu, qui indique le nombre de bits différents entre les deux codes. Elle s'écrit mathématiquement $HD(X, Y) = \|(X \oplus Y)\|$, où X et Y sont deux codes binaires et $\oplus$ est l'opérateur ou exclusif.

Le calcul d'une distance de Hamming est notamment utilisé dans le domaine de l'identification biométrique, par exemple pour évaluer la similarité entre deux iris d'individus à comparer. On connait par exemple les travaux de John Daugman tels que l'article How iris recognition works; IEEE Transactions on circuits and systems for video technology, vol. 14, N). 1, January 2004.

Deux iris très similaires présentent une distance de Hamming très faible car le nombre de bits qui diffèrent entre les codes représentant les iris est faible.

Il est particulièrement important dans ce contexte de sécuriser les opérations effectuées sur les données biométriques, afin de préserver la confidentialité de ces données, et d'éviter que des données utilisées pour ces opérations puissent être apprises et exploitées par des tiers. Cette sécurisation implique de sécuriser la détermination de la distance de Hamming.

A cet égard, on connait des procédés de traitement de données sécurisés exploitant par exemple la méthode des circuits confus (ou « garbled circuits »). C'est le cas de la demande de brevet française n°1162058.

On connait également des procédés de traitement de données sécurisés ayant recours à la technique du chiffrement homomorphe, comme par exemple dans la publication M. Blanton et P. Gasti, Secure and Efficient Protocols for Iris and Fingerprint Identification, ESORICS 2011:190-209.

Ces procédés, bien qu'efficaces du point de vue de la sécurité, présentent l'inconvénient d'être couteux en temps de calcul et en ressources informatiques pour les mettre en oeuvre. En outre, ils ne sont pas optimisés pour la détermination de plusieurs distances de Hamming en parallèle, cas qui peut se présenter lorsque l'on souhaite identifier un individu en comparant un de ses traits biométriques à des traits biométriques d'individus stockés dans une base de données.

Plus généralement, il existe un besoin pour des traitements sécurisés de données détenues par un client et un serveur, du type dans lesquels ni le client, ni le serveur n'obtient d'informations sur les données de l'autre, qui soient d'une mise en oeuvre rapide et qui ne nécessitent pas des puissances de calcul importantes.

PRESENTATION DE L'INVENTION

L'invention a pour but de pallier au moins l'un des inconvénients de l'art antérieur indiqué ci-avant.

Un but de l'invention est de proposer un procédé sécurisé d'évaluation de fonctions de type combinaison linéaire de sous-fonctions à deux entrées binaires, dont notamment la fonction de calcul d'une distance de Hamming, de mise en oeuvre plus rapide et moins coûteuse en ressources informatiques.

Un autre but de l'invention est de proposer un procédé permettant de déterminer en parallèle plusieurs distances de Hamming.

A cet égard, l'invention propose un procédé sécurisé de traitement de données dans lequel on met en oeuvre l'évaluation d'une fonction s'écrivant comme une combinaison linéaire de sous-fonctions à deux entrées binaires, dans lequel un client et un serveur possèdent respectivement un code binaire, comprenant n bits indexés, et un code binaire, comprenant n bits indexés, le procédé comprenant l'évaluation de la fonction avec les codes binaires du client et du serveur en entrées, sans que l'un du client et du serveur n'obtienne d'information sur le code de l'autre,

le procédé étant caractérisé en ce qu'il comprend les étapes suivantes :

a) le serveur génère aléatoirement n valeurs indexées et calcule la combinaison linéaire de ces valeurs avec la même combinaison linéaire que celle appliquée aux sous-fonctions pour obtenir la fonction,

b) le client met en oeuvre, pour chaque bit de son code binaire, une technique de transfert inconscient pour obtenir du serveur une donnée intermédiaire comprenant la valeur générée aléatoirement de même index que le bit du code du client, additionnée de la valeur de la sous-fonction correspondante évaluée en le bit de même index du code du serveur et en ledit bit de son code binaire, et

c) le client effectue une combinaison linéaire des données intermédiaires pour tous les bits de son code binaire, avec la même combinaison linéaire que celle appliquée aux sous-fonctions pour obtenir la fonction, de manière à obtenir un résultat final comprenant la combinaison linéaire des valeurs générées aléatoirement additionnée l'évaluation de la fonction en les deux codes binaires.

Avantageusement, mais facultativement, le procédé selon l'invention peut en outre comprendre au moins l'une des caractéristiques suivantes :

- entre l'étape a) et l'étape b), le serveur génère un ensemble indexé de doublets associé au code, chaque doublet correspondant à un bit de même index du code binaire, et comprenant dans cet ordre :

   ∘ la somme de la valeur générée aléatoirement de même index que le bit et la fonction évaluée en ledit bit et zéro, et
   ∘ la somme de la valeur générée aléatoirement de même index que le bit et la fonction évaluée en ledit bit et un,

- et dans lequel le client récupère par transfert inconscient, pour chaque bit de son code binaire, l'élément du doublet de même index que le bit du code du client tel que :

   ∘ si le bit du code du client est égal à 0, le client récupère le premier élément du doublet, et
   ∘ si le bit du code du client est égal à 1, le client récupère le deuxième élément du doublet.

- Le procédé comprend en outre les étapes suivantes :

   ∘ le client envoie au serveur le résultat final, et

- le serveur retranche du résultat final la combinaison linéaire des valeurs générées aléatoirement pour obtenir l'évaluation de la fonction en les codes binaires.
- Le procédé comprend en outre les étapes suivantes :

   ∘ le serveur envoie au client la combinaison linéaire des valeurs générées aléatoirement, et
   ∘ le client retranche du résultat final la combinaison linéaire des valeurs générées aléatoirement pour obtenir l'évaluation de la fonction en les codes binaires.

- le serveur possède au moins deux codes binaires de n bits indexés, et

   ∘ au cours de l'étape a), le serveur génère autant d'ensembles de valeurs aléatoires qu'il possède de codes binaires, et calcule les combinaisons linéaires des valeurs de chaque ensemble,
   ∘ le serveur génère autant d'ensembles indexés de doublets qu'il possède de codes binaires, et concatène lesdits ensembles de doublets, et
   ∘ la donnée intermédiaire obtenue par le client comprend la concaténation, pour tous les codes binaires du serveur, des données intermédiaires que le client aurait obtenues isolément pour chaque code binaire du serveur.

- chacun du client et du serveur publie, après au moins une opération qu'il a mise en oeuvre, une information duquel l'autre peut détecter :

   ∘ si l'opération mise en oeuvre est conforme au protocole, et si
   ∘ l'opération a été mise en oeuvre sur des données corrompues.

- la fonction à évaluer est la distance de Hamming entre les codes binaires de client et du serveur, la détermination de la distance de Hamming comprenant la détermination du nombre de bits de même index dont la valeur diffère d'un code à l'autre, et dans lequel :

   ∘ au cours de l'étape a), la combinaison linéaire des valeurs générées aléatoirement est la somme desdites valeurs,
   ∘ au cours de l'étape b), la donnée intermédiaire récupérée par le client pour chaque bit de son code binaire est la somme de la valeur générée aléatoirement de même index que le bit du code du client, et du résultat de l'opération « ou exclusif » entre le bit du code du client et le bit de même index du code du serveur, et

◦ au cours de l'étape c), le client somme les données intermédiaires pour tous bits de son code binaire, pour obtenir la somme des données générées aléatoirement additionnée de la distance de Hamming entre les deux codes binaires.

- chaque code binaire du client et du serveur est en outre associé à un code binaire de masque de taille n, dont les index des bits à 1 indiquent les index des bits des codes du client et du serveur à prendre en compte pour la détermination de la distance de Hamming, et

◦ au cours de l'étape a), le serveur génère aléatoirement deux ensembles de valeurs et leurs sommes respectives,
◦ Au cours de l'étape b), la donnée intermédiaire récupérée par le client pour chaque bit de son code binaire comporte deux éléments, dont :

■ Le premier comprend une valeur générée aléatoirement du premier ensemble, additionnée de la valeur de l'intersection entre le résultat de l'opération « ou exclusif » entre le bit du code du client et le bit de même index du code du serveur, et les valeurs des bits correspondant des codes de masque,
■ le deuxième élément de la donnée intermédiaire pour chaque bit du code binaire du client comprend une valeur générée aléatoirement du deuxième ensemble additionnée de l'intersection des valeurs des bits correspondant des codes de masque, et

o au cours de l'étape c), le client somme :

■ d'une part, les premiers éléments des données intermédiaires pour obtenir la valeur de la distance de Hamming entre les codes du client et du serveur sur les bits à 1 des codes de masque additionnée de la première somme des valeurs générées aléatoirement, et
■ d'autre part, les deuxièmes éléments des données intermédiaires, pour obtenir la taille de l'intersection des codes de masque additionnée de la deuxième somme de valeurs générées aléatoirement.

- les codes binaires sont des données biométriques.
- les codes binaires sont des images d'iris encodées.

L'invention propose en outre un système d'identification d'un individu, comportant au moins un serveur de contrôle d'un individu à identifier, et au moins un serveur de gestion d'une base de N données de référence d'individus répertoriés, le serveur de contrôle étant adapté pour procéder à l'acquisition d'une donnée de l'individu,
le système étant caractérisé en ce que le serveur de contrôle et le serveur de gestion comportent des moyens de traitement adaptés pour mettre en oeuvre le procédé sécurisé d'évaluation d'une fonction selon l'une des revendications précédentes entre la donnée de l'individu et au moins une donnée de référence d'individus répertoriés, afin de déterminer les distances de Hamming entre la donnée de l'individu et chaque donnée de référence, et déterminer la donnée de référence présentant des similarités avec la donnée de l'individu à identifier excédant un seuil prédéterminé, pour identifier l'individu comme l'individu répertorié dont provient ladite donnée de référence.
La mise en oeuvre de la technique du transfert inconscient pour évaluer une fonction permet de sécuriser les opérations effectuées sur les données, car le client ne récupère aucune information sur le code détenu par le serveur, et permet en plus de limiter la quantité d'informations récupérées par le client pour rendre le procédé moins coûteux en temps de calcul.

DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :

- les figures 1a, 1b et 1c illustrent des exemples de mise en oeuvre du procédé de comparaison de données proposé par l'invention.
- la figure 2 représente les principales étapes du procédé proposé par l'invention,
- la figure 3 représente schématiquement le codage d'un iris pour l'application du procédé à l'identification biométrique par comparaison d'iris.
- Les figures 4a et 4b illustrent un contexte de mise en oeuvre du procédé.

DESCRIPTION DETAILLEE D'AU MOINS UN MODE DE MISE EN OEUVRE DE L'INVENTION

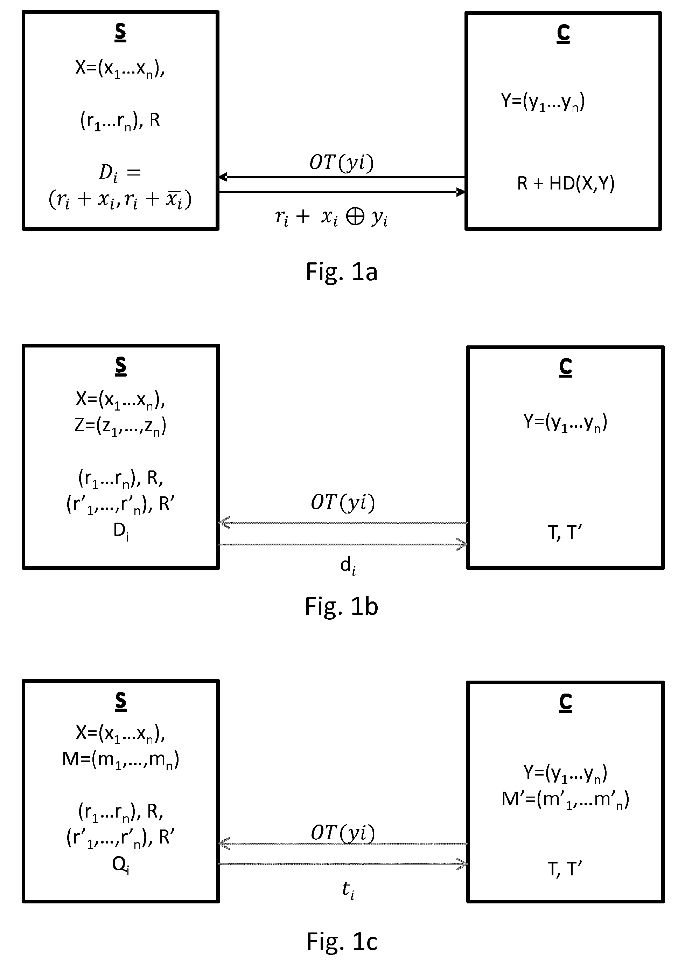

En référence à la figure 1a, on a représenté un serveur S et un client C disposant respectivement d'un code binaire X et Y. L'un ou l'autre du serveur S ou du client C souhaite connaître la valeur de la distance de Hamming entre les deux codes binaires, sans toutefois délivrer à l'autre d'informations sur le code binaire qu'il détient.

Chaque code binaire X et Y comprend n bits, indexés respectivement $x_1,...,x_n$ et $y_1,...,Y_n$.

*Détermination sécurisée d'une distance de Hamming*

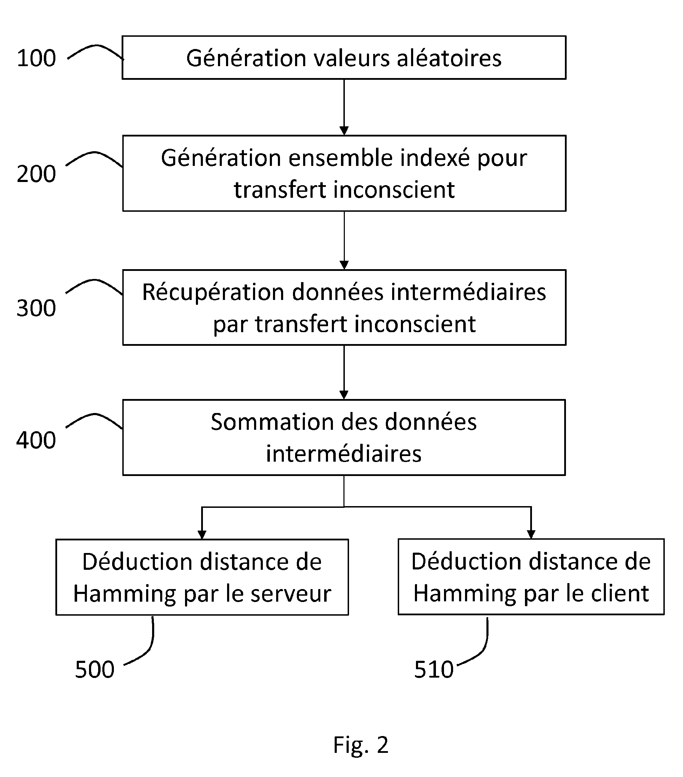

En référence à la figure 2, on a représenté les principales étapes du procédé selon l'invention. Au cours d'une étape 100, le serveur génère n valeurs aléatoires $r_1,...,r_n$. Ces valeurs sont de préférence des entiers, et plus avantageusement des éléments de $\mathbb{Z}_{n+1}$. Le serveur calcule la somme R de ces valeurs, $R = \sum_{i=1}^{n} r_i$.

Au cours d'une étape 200, le serveur S génère un ensemble indexé d'éléments pouvant être transférés au client par transfert inconscient. En l'espèce, il s'agit d'un ensemble de doublets $D_i$, chaque doublet étant associé au bit de même index $x_i$ du code.

Le premier élément d'un doublet $D_i$ est la somme de la valeur générée aléatoirement de même indice $r_i$ et du bit $x_i$, tandis que le deuxième élément est la somme de la valeur générée aléatoirement de même indice $r_i$ et du conjugué du bit $x_i$.

Chaque doublet s'écrit donc $D_i = (r_i + x_i, r_i + \overline{x_i})$, pour i compris entre 1 et n.

Au cours d'une étape 300, le client engage avec le serveur un transfert inconscient (connu sous le nom de « oblivious transfer » en anglais) pour chaque bit de son code binaire.

Un transfert inconscient est une opération de calcul entre deux parties P1 et P2. Dans ce type d'opération, P1 dispose d'une liste de N éléments indexés $X_i$, et P2 connaît le nombre N d'éléments de la liste et choisit un indice i entre 0 et N-1. Par transfert inconscient, P2 récupère le i$^{\text{ème}}$ élément de P1, c'est-à-dire l'élément de P1 indexé par i.

P1 n'apprend aucune information sur l'indice de l'élément récupéré par P2.

P2 ne récupère quant à lui aucune information sur les autres éléments de la liste détenus par P1.

On applique ici la méthode du transfert inconscient à la détermination de la distance de Hamming. Dans ce contexte le client effectue, pour chaque bit $y_i$ de son code binaire, un transfert inconscient de l'un des éléments d'un doublet $D_i$ de même indice.

L'élément du doublet qui est transféré est fonction de la valeur du bit $y_i$ : si $y_i$=0, le client C reçoit par transfert inconscient le premier élément du doublet, c'est-à-dire $r_i + x_i$. Si $y_i$=1, le client reçoit le deuxième élément du doublet, c'est-à-dire $r_i + \overline{x_i}$.

Comme la récupération de l'élément est réalisée par transfert inconscient, le serveur S ne sait pas quel élément a été communiqué, et il ne peut donc pas en déduire la valeur de $y_i$.

De plus, comme chaque élément comprend une valeur aléatoire, le client C ne peut pas en déduire la valeur du bit $x_i$ ou $\overline{x_i}$ qu'il a récupéré.

De cette manière, la valeur du bit du code binaire contenue dans l'élément récupéré par le client est liée au résultat du ou exclusif entre $x_i$ et $y_i$. En effet, on peut facilement vérifier que le client obtient une donnée $d_i$ égale à

$$d_i = r_i + x_i \oplus y_i$$

Le client reçoit donc, pour chaque bit de son code binaire, une donnée intermédiaire $d_i$ comprenant la valeur générée aléatoirement $r_i$ de même index que le bit $y_i$ de son code binaire, additionnée de la valeur de l'opération « ou exclusif » entre le bit du code $y_i$ du client et le bit de même index $x_i$ du code du serveur.

Le client somme ensuite, au cours d'une étape 400, l'ensemble des données intermédiaires di correspondant aux bits de son code binaire, et obtient un résultat final $RF = \sum_{i=1}^{n}(r_i + x_i \oplus y_i) = R + HD(X,Y)$. Le résultat final RF comporte la somme R des valeurs générées aléatoirement $r_i$, additionnée de la distance de Hamming entre les deux codes binaires X et Y.

La suite du procédé dépend du destinataire du résultat du procédé de comparaison des données. Si c'est le serveur qui doit connaître la distance de Hamming, au cours d'une étape 500, le client envoie le résultat final RF au serveur, qui lui retranche la somme R des valeurs générées aléatoirement pour obtenir la distance de Hamming HD(X,Y).

Si c'est le client qui doit connaître la distance de Hamming, au cours d'une étape 510, le serveur envoie au client la somme R des valeurs générées aléatoirement. Le client peut retrancher au résultat final RF cette somme R pour obtenir la valeur de la distance de Hamming.

On peut généraliser ce procédé de traitement de données à l'évaluation d'autres fonctions que la fonction «distance de Hamming », notamment des fonctions s'écrivant comme la combinaison linéaire de sous-fonctions de deux entrées binaires $f(X,Y) = \sum_i \lambda_i f_i(x_i, y_i)$.

Dans ce cas, au cours de l'étape 100, le serveur S génère également $n$ valeurs aléatoires $r_1,...,r_n$ entières, et calcule la combinaison linéaire $R = \sum_{i=1}^n \lambda_i r_i$, où la même combinaison linéaire (c'est-à-dire avec les mêmes coefficients $\lambda_i$) est appliquée pour le calcul de R que celle qui est appliquée aux sous-fonctions $f_i$ pour obtenir la fonction F.

Au cours de l'étape 200, les doublets $D_i$ générés par le serveur S sont sous la forme $D_i = (r_i + f_i(x_i, 0), r_i + f_i(x_i, 1))$.

La sortie obtenue par le client lors de l'étape 300 de transfert inconscient est donc, pour chaque fonction $f_i$, $t_i = r_i + f_i(x_i, y_i)$.

Alors, au cours de l'étape 400, le client C somme l'ensemble des $\lambda_i t_i$ pour obtenir $T = \sum_{i=1}^n \lambda_i t_i$. Les étapes 500 et 510 sont alors les mêmes que précédemment : au cours de l'étape 500, le client envoie le total T au serveur, qui peut calculer T-R et retourner la valeur T-R au client. Au cours de l'étape 510, le serveur envoie R au client qui calcule et retourne au serveur la valeur T-R.

Ce procédé de calcul englobe la fonction de type distance de Hamming en prenant pour tous les $f_i$ $f_i(x_i, y_i) = x_i \oplus y_i$ et tous les $\lambda_i$ égaux à 1.

*Détermination de plusieurs distances de Hamming en parallèle*

Le même principe de détermination sécurisée de distance de Hamming peut être mise en oeuvre pour déterminer plusieurs distances de Hamming en parallèle.

En référence à la figure 1b, le serveur S possède plusieurs codes binaires $X^1 = x^1_1,...,x^1_n$ ,..., $X^N = x^N_1,...,x^N_n$, que l'on souhaite comparer au code binaire du u client Y.

Au cours de l'étape 100 illustrée en figure 2, le serveur S génère n valeurs aléatoires pour chaque code binaire. Par exemple, dans le cas de deux codes binaires $X^1$, $X^2$, le serveur génère aléatoirement n valeurs $r_1,...,r_n$ associées au premier code binaire $X^1$, et n valeurs $r'_1,...,r'_n$ associées au second code binaire $X^2$. En outre, le serveur calcule les sommes R et R' de chaque ensemble de valeurs $(r_1,...,r_n)$ et $(r'_1,...,r'_n)$.

De manière analogue à précédemment, le serveur crée ensuite au cours de l'étape 200 un ensemble de doublets $D_i$ pouvant être transférés au client par transfert inconscient, chaque doublet $D_i$ étant associé aux bits $x^1 i$, $x^2 i$ de même index des codes binaires $X^1$ et $X^2$.

Pour ce faire, le serveur génère autant d'ensembles indexés de doublets qu'il possède de codes binaires $X^j$, chaque doublet étant associé à un bit d'un code binaire, et construit comme précédemment à partir du bit du code binaire et d'une valeur générée aléatoirement de même index. Le serveur concatène lesdits ensembles pour obtenir un doublet $D_i$ qui s'écrit donc :

$$D_i = (r_i + x_{1i} || r'_i + x_{2i}, r_i + \overline{x1_i} || r'_i + \overline{x_{2i}})$$

Le client met en ensuite en oeuvre les transferts inconscients de l'étape 300 et récupère, pour chaque bit $y_i$ de son code binaire, une donnée intermédiaire $d_i$ constituée de la concaténation de données intermédiaires que le client aurait reçu séparément pour chaque code binaire du serveur :

$$d_i = (r_{1_i} + x_{1_i} \oplus y_i || r'_i + x_{2i} \oplus y_i)$$

De la même manière que précédemment, au cours de l'étape 400 le client peut sommer l'ensemble des données intermédiaires récupérées, pour tous les bits yi de son code binaire, et obtenir, pour chaque code binaire du serveur, la distance de Hamming entre ce code binaire et celui du client, additionnée d'une somme de valeurs générées aléatoirement connue par le serveur.

Le client peut ensuite envoyer ces sommes au serveur pour tout ou partie des codes binaires du serveur au cours de l'étape 500, afin que ce dernier en déduise la distance de Hamming entre le code binaire du client et le sien, à partir des sommes R, R', de valeurs générées aléatoirement.

A l'inverse, au cours de l'étape 510, le serveur peut envoyer au client tout ou partie des sommes R, R' des valeurs générées aléatoirement, et le client en déduit les distances de Hamming entre les codes binaires du serveur correspondant et son code binaire.

*Détermination d'une distance de Hamming pondérée*

Une variante de de procédé est la détermination de distances de Hamming pondérées, applicable notamment dans un contexte d'identification biométrique par comparaison d'iris d'individus.

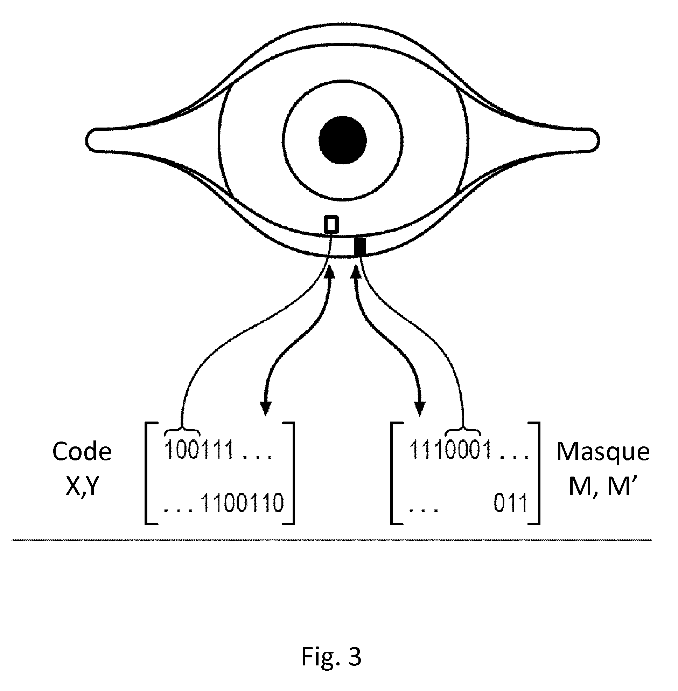

En référence à la figure 3, lorsqu'une identification biométrique est mise en oeuvre par comparaison d'iris, on compare les zones visibles de l'iris en déterminant la distance de Hamming entre des codes binaires représentant ces zones.

Or, pour ne comparer que les zones visibles de l'iris, on associe à chaque code d'iris un masque, sous la forme d'un code binaire dont les bits à 1 correspondent à des zones visibles de l'oeil.

La distance de Hamming pondérée est donc la distance de Hamming considérée uniquement pour les zones visibles communes aux deux iris comparés. Elle s'écrit : $HD(X, Y) = \frac{\|(X \oplus Y) \cap M \cap M'\|}{\|M \cap M'\|}$, où M est un code de masque associé au code X, et M' est un code de masque associé au code Y.

On va maintenant décrire un procédé de détermination d'une distance de Hamming pondérée.

En référence à la figure 1c, chaque code binaire du client et du serveur est associé à un code de masque respectif $M=(m_1,...,m_n)$, $M'=(m'_1,...m'_n)$.

Au cours de l'étape 100, le serveur S génère aléatoirement deux jeux de n données $r_1,...,r_n$, $r'_1,...,r'_n$, ainsi que leurs sommes respectives R et R'.

Au cours de l'étape 200, le serveur S génère un ensemble indexé dont chaque élément correspondant à un bit du code binaire et un bit du code de masque de même index. Chaque élément s'écrit :

$$Q_i = \{(r_i, r'_i), (r_i, r'_i), (r_i + m_i.x_i, r'_i + m_i), (r_i + m_i.\overline{\overline{x_i}}, r'_i + m_i)\}.$$

Au cours de l'étape 300, le client met en oeuvre un transfert inconscient, en récupérant l'un des éléments de $Q_i$ pour chaque bit $y_i$, en fonction de la valeur du bit $y_i$ et de la valeur du bit du code de masque de Y correspondant.

Si $y_i=0$, $m'_i=0$, le client récupère$(r_i, r'_i)$.
Si $y_i=1$, $m'_i=0$, le client récupère $(r_i, r'_i)$.
Si $y_i=0$, $m'_i=1$, le client récupère $(r_i + m_i.x_i, r'_i + m_i)$.
Si $y_i=1$, $m'_i=1$, le client récupère $(r_i + m_i.\overline{\overline{x_i}}, r'_i + m_i)$.

De cette manière, le client récupère en fait une donnée intermédiaire composée de deux variables $t_i$, $t'_i$ telles que :

$$t_i = r_i + m_i.m'_i.(x_i \oplus y_i)$$

$$t'_i = r'_i + m_i.m'_i$$

Au cours de l'étape 400, le client somme les données intermédiaires pour tous les bits $y_i$ de son code Y.

$$T = \sum_{i=1}^{n} t_i = R + \|(X \oplus Y) \cap M \cap M'\|$$

$$T' = \sum_{i=1}^{n} t'_i = R' + \|M \cap M'\|$$

Le résultat final obtenu par le client comprend une valeur T égale au numérateur de la distance de Hamming, additionné de la somme des premières valeurs générées aléatoirement $r_1,...,r_n$. Le numérateur de la distance de Hamming est en fait la distance de Hamming entre les deux codes d'iris, uniquement pour les portions correspondant à des zones non masquées, c'est-à-dire des zones pour lesquelles les bits des codes de masque sont à 1.

Le résultat final comprend également une valeur T' égale au dénominateur de la distance de Hamming, additionnée de la somme des secondes valeurs générées aléatoirement r'$_1$,...,r'$_n$. Le dénominateur de la distance de Hamming correspond à la taille du code pris en compte pour la détermination de la distance de Hamming pondérée.

Comme précédemment, la suite du procédé dépend de la personne qui doit obtenir la distance de Hamming. Si c'est le serveur qui souhaite connaître la distance de Hamming, au cours de l'étape 500, le client lui envoie les deux valeurs T et T', auxquelles le serveur retranche respectivement R et R' pour obtenir le numérateur et le dénominateur de la distance de Hamming. Il lui suffit ensuite de diviser l'un par l'autre.

Si le client doit connaître la distance de Hamming, au cours de l'étape 510, le serveur envoie au client les sommes R et R' des premières et secondes valeurs générées aléatoirement. Le client retranche ces sommes respectivement aux valeurs T et T' pour obtenir le numérateur et le dénominateur de la distance de Hamming. La division lui permet d'obtenir cette distance.

Cette variante de traitement est également compatible à une détermination en parallèle de plusieurs distances de Hamming comme exposé ci-avant.

*Sécurisation du procédé en cas d'interlocuteurs malveillants*

Les variantes du procédé de comparaison exposées ci-dessus permettent une sécurisation du calcul dans le cas d'interlocuteurs « semi-honnêtes », c'est-à-dire des interlocuteurs qui suivent les étapes du procédé tout en essayant d'obtenir des informations supplémentaires sur les données possédées par les autres interlocuteurs.

Un autre cas d'implémentation est en cas d'interlocuteurs « malveillants », qui utilisent tout type de stratégie pour obtenir des informations sur les données possédées par les autres, au besoin sans suivre rigoureusement les étapes du procédé.

Pour sécuriser le procédé en cas d'interlocuteurs malveillants, on peut prévoir qu'à chaque opération mise en oeuvre par le client ou par le serveur, celui-ci publie, à destination de l'autre, une information duquel l'autre peut détecter si l'opération s'inscrit ou non dans le protocole qui doit être exécuté et si elle a été mise en oeuvre sur des données corrompues.

On peut utiliser pour ce faire des outils de chiffrement homomorphe connus de l'homme de l'art, permettant à deux parties d'effectuer des calculs sur des données chiffrées sans avoir besoin de déchiffrer ni de connaître la clé secrète de déchiffrement. On pourra pour plus d'informations se référer à la publication Mehmet S. Kiraz, Berry Schoenmakers, José Villegas: Efficient Committed Oblivious Transfer of Bit Strings. ISC 2007:130-144.

Par exemple, on se munit d'une opération Com dite de « commitment » ou « de mise en gage » qui bénéficie de la propriété d'homomorphisme, c'est-à-dire qu'elle est munie d'opérations $\boxplus$ et $\odot$ telles que :

$$Com\,(x_1, r_1) \odot Com(x_2, r_2) \;=\; Com(x_1 \boxplus x_2, r_1 \boxplus r_2),\ \text{quels que soient X}_1\text{, X}_2\text{, r}_1\text{,r}_2.\ \boxplus\ \text{est par exemple}$$

l'addition et $\odot$ la multiplication.

On applique ces opérations de mise en gage à l'ensemble des étapes du procédé.

En premier lieu, préalablement à l'étape 100 de génération de valeurs aléatoires par le serveur, le client C calcule et publie $Com(y_i, \chi_i)$ pour chaque bit $y_i$ de son code binaire. Il prouve également en utilisant des preuves à divulgation nulle de connaissances que les bits $y_i$ de C sont bien des bits.

Puis, lorsque le serveur génère à l'étape 200 des doublets $D_i = (r_i + x_i,\ r_i + \overline{x_i}\,)$, il peut générer une preuve à divulgation nulle de connaissance que la différence entre les deux éléments du doublet est de valeur absolue 1, sans révéler le doublet. Dans le cas contraire, le client détecte qu'il y a eu une fraude de la part du serveur.

Le serveur S met alors en gage les éléments de chaque doublet, en notant $D_i = (a_i, b_i)$, le serveur calcule et publie $(A_i = Com(a_i, \alpha_i))_{i=1...n}$ et $(B_i = Com(b_i, \beta_i))_{i=1...n}$

Au cours de l'étape 300 de transfert inconscient. Le client reçoit alors du serveur, outre les données intermédiaires $t_i$, des données $T_i$ correspondantes, et il met en gage les données intermédiaires, c'est-à-dire il calcule et publie, pour tout i, une donnée $C_i = Com_i(t_i, \tau_i)$ fonction de $t_i$ et $T_i$, cette donnée ne permettant pas au serveur d'en déduire les valeurs de $t_i$ et $T_i$.

Lorsque le client a sommé toutes les données intermédiaires $t_i$ pour obtenir le résultat T, il somme également les données $T_i$ pour obtenir un total T'.

Le client calcule ensuite $Com(T, T') = Com(\sum_{i=1}^{n} t_i, \sum_{i=1}^{n} \tau_i) = Com(t_1 \boxplus ... \boxplus t_n, \tau_1 \boxplus ... \boxplus \tau_n) = C_1 \odot ... \odot C_n$ comme on a dit précédemment, et publie $Com(T, T')$.

Il envoie ensuite au serveur les sommes T et T'. Le serveur, ayant préalablement eu accès à tous les $C_i$, est en mesure de calculer $C_1 \odot ... \odot C_n$ et donc de vérifier la valeur de $Com(T, T')$, pour vérifier que les données $t_i$, et donc les données $y_i$, n'ont pas été corrompues.

Alternativement, le serveur S calcule:

$$K = Com(2R + n, \rho) = A_1 \odot ... \odot A_n \odot B_1 \odot ... \odot B_n$$

Le serveur S envoie R et la preuve que $K$ = Com$(2R + n, \rho)$ au client, et le client C calcule $K = A_1 \odot ... \odot A_n \odot B_1 \odot ... \odot B_n$ et vérifie la preuve que $K = Com(2R + n, \rho)$. Enfin, le client calcule et retourne au serveur le total T - R.

Le même type de mesure de sécurité est applicable aux autres opérations menées dans le calcul.

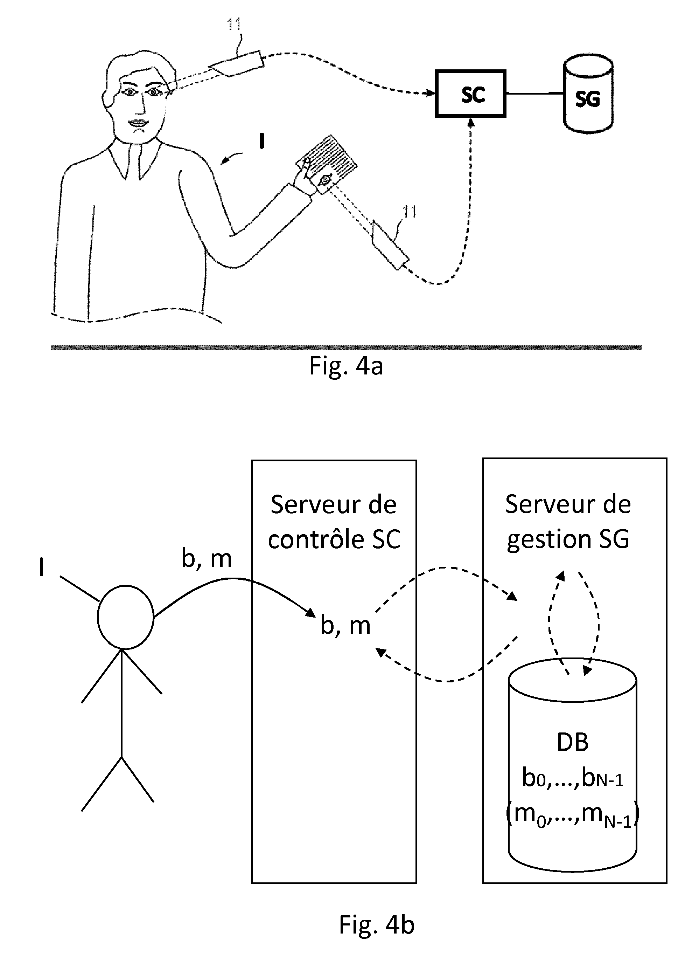

En référence aux figures 4a et 4b, on a représenté un contexte de mise en oeuvre du procédé, pour l'identification biométrique d'un individu. Cette identification peut par exemple être un contrôle d'accès à un lieu sécurisé.

Une base de données DB comprend un ensemble de N données biométriques indexées $b_i$, i étant compris entre 0 et N-1, d'individus répertoriés comme étant par exemple autorisés à pénétrer dans un lieu, ou au contraire dont la présence est interdite dans ce lieu.

Cette base de données DB est associée à un serveur de gestion SG, qui peut être doté de moyens de calculs mis en oeuvre par un programme informatique approprié. Le serveur de gestion constitue le serveur S du procédé décrit ci-avant.

L'individu I s'identifie auprès d'un serveur de contrôle SC, qui est également doté de moyens de calculs mis en oeuvre par un programme informatique approprié, et comprend en outre des moyens 11 d'acquisition et de traitement d'une donnée propre à l'individu, notamment une donnée biométrique b.

La donnée b peut provenir de manière connue d'une image numérisée et encodée d'un caractère biométrique tel que notamment l'iris de l'individu.

La donnée b peut également être stockée sous forme numérique dans un document d'identité de l'individu.

Les données $b_0$ à $b_{N-1}$ de la base sont dans ce cas également des images d'iris encodées d'individus. Dans ce cas, la base de données DB comprend en outre, pour chaque donnée d'iris $b_i$, un code de masque $m_i$ correspondant. Le serveur de contrôle peut également acquérir un code de masque m correspondant à l'image d'iris b, ou traiter la donnée b en vue de l'obtenir. Ces codes de masque indiquent les zones de l'iris visibles, et donc exploitables, ces zones étant typiquement celles qui ne sont pas masquées par les paupières ou les cils.

Une fois que le serveur de contrôle a obtenu la donnée biométrique b de l'individu encodée sous forme de code binaire d'iris, ainsi que le code de masque correspondant, il peut engager le procédé de comparaison entre la donnée b et l'ensemble des données d'iris $b_i$ stockées dans la base de données de la manière décrite précédemment en référence aux figures 1 à 3. Le serveur de contrôle constitue alors le client qui dialogue avec le serveur.

De préférence, mais de manière non limitative, le serveur de contrôle engage un procédé de comparaisons en parallèle entre la donnée b et plusieurs données $b_i$, chacune de ces comparaisons comprenant la détermination d'une distance de Hamming pondérée par les codes de masques correspondant.

De plus, c'est de préférence le serveur de gestion qui obtient les valeurs des distances de Hamming.

Une fois que la donnée b a été comparée à l'intégralité des données $b_i$, le serveur de gestion identifie, le cas échéant, la donnée $b_i$ parmi l'intégralité des données $b_i$ présentant le plus de similarités avec la donnée b, ou celle dont la distance de Hamming avec la donnée b est inférieure à un seuil prédéterminé, ce qui correspond à un taux de similarité entre les deux données excédant un seuil prédéterminé.

Si cette donnée $b_i$ existe, cela signifie que l'individu dont provient cette donnée correspond à l'individu à identifier.

En fonction du résultat obtenu par le serveur de gestion, celui-ci déclenche ou non une étape subséquente, par exemple il peut autoriser ou refuser l'accès de l'individu à un lieu sécurisé pour lequel l'identification a eu lieu.

Le procédé décrit présente l'avantage d'être sécurisé et de mise en oeuvre aisée. Il peut être décliné en de nombreuses variantes, notamment pour tout type de fonction à évaluer à partir de données détenues par des interlocuteurs différents qui doivent maintenir uen confidentialité l'un par rapport à l'autre, ainsi également que , dans le cas de de calcul de comparaison à partir de distances de Hamming, selon le nombre de distances de Hamming à déterminer et le contexte d'application, ou encore la nature des interlocuteurs qui mettent en oeuvre le procédé.

Ci-après un exemple d'implémentation du procédé pour le calcul d'une distance de Hamming.

- **Entrées:**

  - Serveur $S$ : une chaîne *de n* bits $X = (x_1, ..., x_n)$
  - Client $Cl$ : une chaîne *de n* bits $Y = (y_1, ..., y_n)$

- **Sortie:**

  - $1^{ere}$ Option: $S$ obtient $d_H(X, Y)$ et $Cl$ n'obtient rien
  - $2^{nde}$ Option: $Cl$ obtient $d_H(X, Y)$ et $S$ n'obtient rien

• **Protocole:**

1. $S$ génère $n$ valeurs aléatoires $r_1, \ldots, r_n \in_R \mathbb{Z}_{n+1}$ et calcule $R = \sum_{i=1}^{n} r_i$

2. Pour chaque $i$ = 1,...,$n$, $S$ et $Cl$ exécutent un $OT_1^2$ où

   - $S$ est l'envoyeur et $Cl$ le receveur.
   - le bit de sélection de $Cl$ est $y_i$.
   - l'entrée de $S$ est ($r_i + x_i$, $r_i + \overline{x_i}$).
   - La sortie obtenue par $Cl$ est donc $t_i = r_i + (x_i \oplus y_i)$.

3. $Cl$ calcule $T = \Sigma_{i=1}^{n} t_i$

4. 1$^{ere}$ Option:

   (a) $Cl$ envoie $T$ à $S$
   (b) $S$ calcule et retourne $T$ - $R$

   2$^{nde}$ Option:

   (a) $S$ envoie $R$ à $Cl$
   (b) $Cl$ calcule et retourne $T$ - $R$

Exemple de distance de Hamming - Cas adversaires malveillants :

• **Entrées:**

   - Serveur $S$ : une chaîne *de n* bits $X = (x_1,...,x_n)$
   - Client $Cl$ : une chaîne *de n* bits $Y = (y_1,...,y_n)$

• **Sortie:**

   - 1$^{ere}$ Option: $S$ obtient $d_H(X,Y)$ et $Cl$ n'obtient rien
   - 2$^{nde}$ Option: $Cl$ obtient $d_H(X,Y)$ et $S$ n'obtient rien

• **Protocole:**

1. $Cl$ met en gage ses bits $y_i$ : il calcule et publie $Com(y_i, x_i)$ pour chaque $i$ = 1...$n$. Il prouve également, en utilisant des preuves de connaissance, à divulgation nulle de connaissance, sur les mises en gage, que $y_i = 0$ ou $y_i = 1$.

2. $S$ génère $n$ valeurs aléatoires $r_1, \ldots, r_n \in_R \mathbb{Z}_{n+1}$ et calcule $R = \mathbb{Z}_{n+1}$.

3. Pour chaque $i$ = 1,...,$n$, $S$ calcule ($a_i$, $b_i$) = ($r_i + x_i$, $r_i + \overline{x_i}$) et met en gage $a_i$ et $b_i$. Il et calcule et publie ($A_i = Com(a_i, \alpha_i))_{i=1,...,n}$ et ($B_i = Com(b_i, \beta_i))_{i=1,...,n}$

4. $S$ prouve à $Cl$, en utilisant des preuves à divulgation nulle de connaissance sur les mises en gage, que $|b_i - a_i| = 1$, pour chaque $i$ = 1,...,$n$.

5. Pour chaque $i$ = 1,...,$n$, $S$ et $Cl$ exécutent un $COT$ où

   - $S$ est l'envoyeur et $Cl$ le receveur.
   - le bit de sélection de $Cl$ est $y_i$.
   - l'entrée de $S$ est ($a_i$, $b_i$).
   - La sortie obtenue par $Cl$ est $t_i = r_i + (x_i \oplus y_i)$ et $\tau_i$.
   - Les deux parties obtiennent $C_i = Com(t_i, \tau_i)$

6. $Cl$ calcule $T = \Sigma_{i=1}^{n} t_i$

7. 1$^{ere}$ Option:

   (a) $Cl$ calcule $C = Com(T, \tau) = C_1 \odot ... \odot C_n$

(b) $Cl$ envoie $T$ et la preuve que $C = Com(T, \tau)$ à $S$

(c) $S$ calcule $C = C_1 \odot ... \odot C_n$ et vérifie la preuve que $C = Com(T, \tau)$.

(d) $S$ calcule et retourne $T - R$

$2^{nde}$ Option:

(a) $S$ calcule $K = Com(2R + n, \rho) = A_1 \odot ... \odot A_n \odot B_1 \odot ... \odot B_n$

(b) $S$ envoie $R$ et la preuve que $K = Com(2R + n, \rho)$ à $Cl$

(c) $Cl$ calcule $K = A_1 \odot ... \odot A_n \odot B_1 \odot ... \odot B_n$ et vérifie la preuve que $K = Com(2R + n, \rho)$.

(d) $S$ envoie $R$ à $Cl$

(e) $Cl$ calcule et retourne $T - R$

Evaluation sécurisée d'une fonction combinaison linéaire de fonctions à 2 entrées binaires :

• **Entrées:**

- Serveur $S$ : une chaîne de $n$ bits $X = (x_1, ..., x_n)$
- Client $Cl$ : une chaîne de $n$ bits $Y = (y_1, ..., y_n)$

• **Sortie:**

- $1^{ere}$ Option: $S$ obtient $f(X, Y) = \sum \lambda_i f_i(x_i, y_i)$ et $Cl$ n'obtient
- $2^{nde}$ Option: $Cl$ obtient $f(X, Y) = \sum \lambda_i f_i(x_i, y_i)$ et $S$ n'obtient

• **Protocole:**

1. $S$ génère $n$ valeurs aléatoires $\overline{x_i}$ et calcule ⊞

2. Pour chaque $i = 1, ..., n$, $S$ et $Cl$ exécutent un ⊞ où

- $S$ est l'envoyeur et $Cl$ le receveur.
- le bit de sélection de $Cl$ est $y_i$.
- l'entrée de $S$ est $(r_i + f_i(x_i, 0), r_i + f_i(x_i, 1))$.
- La sortie obtenue par $Cl$ est donc $t_i = r_i + f_i(x_i, y_i)$.

3. $Cl$ calcule $\overline{x_i}$

4. $1^{ere}$ Option:

(a) $Cl$ envoie $T$ à $S$

(b) $S$ calcule et retourne $T - R$

$2^{nde}$ Option:

(a) $S$ envoie $R$ à $Cl$

(b) $Cl$ calcule et retourne $T - R$

**Revendications**

1. Procédé sécurisé de traitement de données dans lequel on met en oeuvre l'évaluation d'une fonction (F) s'écrivant comme une combinaison linéaire de sous-fonctions ($f_i$) à deux entrées binaires, dans lequel un client (C) et un serveur (S) possèdent respectivement un code binaire Y, comprenant n bits indexés $y_1, ... y_n$), et un code binaire X, comprenant n bits indexés $x_1, ..., x_n$, le procédé comprenant l'évaluation de la fonction (F) avec les codes binaires du client Y et du serveur X en entrées, sans que l'un du client (C) et du serveur (S) n'obtienne d'information sur le code de l'autre,

le procédé étant **caractérisé en ce qu'**il comprend les étapes suivantes :

a) le serveur génère aléatoirement n valeurs indexées ($r_i$) et calcule la combinaison linéaire (R) de ces valeurs avec la même combinaison linéaire que celle appliquée aux sous-fonctions ($f_i$) pour obtenir la fonction (F),

b) le client met en oeuvre, pour chaque bit ($y_i$) de son code binaire (Y), une technique de transfert inconscient pour obtenir du serveur une donnée intermédiaire comprenant la valeur générée aléatoirement ($r_i$) de même index que le bit ($y_i$) du code du client, additionnée de la valeur de la sous-fonction correspondante évaluée en le bit de même index du code du serveur et en ledit bit de son code binaire ($f_i(x_i,y_i)$), et

c) le client effectue une combinaison linéaire des données intermédiaires pour tous les bits ($y_i$) de son code binaire, avec la même combinaison linéaire que celle appliquée aux sous-fonctions pour obtenir la fonction (F), de manière à obtenir un résultat final (RF) comprenant la combinaison linéaire (R) des valeurs générées aléatoirement ($r_1,...,r_n$) additionnée de l'évaluation de la fonction en les deux codes binaires.

2.  Procédé sécurisé selon la revendication précédente, dans lequel, entre l'étape a) et l'étape b), le serveur génère un ensemble indexé de doublets ($D_i$) associé au code, chaque doublet correspondant à un bit ($x_i$) de même index du code binaire, et comprenant dans cet ordre :

- la somme ($r_i + f_i(x_i, 0)$) de la valeur générée aléatoirement ($r_i$) de même index que le bit et la fonction évaluée en ledit bit $x_i$ et zéro, et
- la somme ($r_i + f_i(x_i, 1)$) de la valeur générée aléatoirement ($r_i$) de même index que le bit et la fonction évaluée en ledit bit $x_i$ et un,

et dans lequel le client récupère par transfert inconscient, pour chaque bit ($y_i$) de son code binaire, l'élément du doublet ($D_i$) de même index que le bit ($y_i$) du code du client tel que :

- si le bit ($y_i$) du code du client est égal à 0, le client récupère le premier élément du doublet ($D_i$), et
- si le bit ($y_i$) du code du client est égal à 1, le client récupère le deuxième élément du doublet ($D_i$).

3.  Procédé sécurisé selon l'une des revendications précédentes, comprenant en outre les étapes suivantes :

- le client envoie au serveur le résultat final (RF), et
- le serveur retranche du résultat final la combinaison linéaire (R) des valeurs générées aléatoirement pour obtenir l'évaluation de la fonction en les codes binaires.

4.  Procédé sécurisé selon l'une des revendications 1 ou 2, comprenant en outre les étapes suivantes :

- le serveur envoie au client la combinaison linéaire (R) des valeurs générées aléatoirement, et
- le client retranche du résultat final (RF) la combinaison linéaire des valeurs générées aléatoirement pour obtenir l'évaluation de la fonction en les codes binaires.

5.  Procédé sécurisé selon l'une des revendications 2 à 4, dans lequel le serveur possède au moins deux codes binaires ($X^1,...,X^N$) de n bits indexés, et

- au cours de l'étape a), le serveur génère autant d'ensembles de valeurs aléatoires ($r^1_i,..., r^n_i$) qu'il possède de codes binaires, et calcule les combinaisons linéaires ($R^1,..., R^N$) des valeurs de chaque ensemble,
- le serveur génère autant d'ensembles indexés de doublets ($D_i$) qu'il possède de codes binaires ($X^1,...,X^N$), et concatène lesdits ensembles de doublets, et
- la donnée intermédiaire obtenue par le client comprend la concaténation, pour tous les codes binaires ($X^1,...,X^N$) du serveur, des données intermédiaires que le client aurait obtenues isolément pour chaque code binaire du serveur.

6.  Procédé sécurisé selon l'une des revendications précédentes, dans lequel chacun du client et du serveur publie, après au moins une opération qu'il a mise en oeuvre, une information duquel l'autre peut détecter :

- si l'opération mise en oeuvre est conforme au protocole, et si
- l'opération a été mise en oeuvre sur des données corrompues.

7.  Procédé sécurisé selon l'une des revendications précédentes, dans lequel la fonction à évaluer est la distance de Hamming entre les codes binaires de client et du serveur, la détermination de la distance de Hamming comprenant la détermination du nombre de bits de même index dont la valeur diffère d'un code à l'autre, et dans lequel :

- au cours de l'étape a), la combinaison linéaire des valeurs générées aléatoirement est la somme desdites valeurs,
- au cours de l'étape b), la donnée intermédiaire récupérée par le client pour chaque bit $(y_i)$ de son code binaire est la somme de la valeur générée aléatoirement $(r_i)$ de même index que le bit $(y_i)$ du code du client, et du résultat de l'opération « ou exclusif » entre le bit du code $(y_i)$ du client et le bit de même index $(x_i)$ du code du serveur, et
- au cours de l'étape c), le client somme les données intermédiaires pour tous bits de son code binaire, pour obtenir la somme des données générées aléatoirement additionnée de la distance de Hamming entre les deux codes binaires (X,Y).

8. Procédé sécurisé selon la revendication précédente, dans lequel chaque code binaire du client et du serveur est en outre associé à un code binaire de masque (M, M') de taille n, dont les index des bits $(m_i)$ à 1 indiquent les index des bits $(x_i, y_i)$ des codes du client et du serveur à prendre en compte pour la détermination de la distance de Hamming, et

- au cours de l'étape a), le serveur génère aléatoirement deux ensembles de valeurs $(r_i, r'_i)$ et leurs sommes respectives (R, R'),
- Au cours de l'étape b), la donnée intermédiaire récupérée par le client pour chaque bit $(y_i)$ de son code binaire comporte deux éléments, dont :

  ◦ Le premier comprend une valeur (ri) générée aléatoirement du premier ensemble, additionnée de la valeur de l'intersection entre le résultat de l'opération « ou exclusif » entre le bit du code du client (yi) et le bit de même index du code du serveur (xi), et les valeurs des bits correspondant des codes de masque (mi, mi'),
  ◦ le deuxième élément de la donnée intermédiaire pour chaque bit du code binaire du client $(y_i)$ comprend une valeur générée aléatoirement du deuxième ensemble $(r'_i)$ additionnée de l'intersection des valeurs des bits correspondant des codes de masque $(m_i, m_i')$, et

- au cours de l'étape c), le client somme :

  ◦ d'une part, les premiers éléments des données intermédiaires pour obtenir la valeur de la distance de Hamming entre les codes du client et du serveur sur les bits à 1 des codes de masque additionnée de la première somme (R) des valeurs générées aléatoirement, et
  o d'autre part, les deuxièmes éléments des données intermédiaires, pour obtenir la taille de l'intersection des codes de masque additionnée de la deuxième somme (R') de valeurs générées aléatoirement.

9. Procédé sécurisé selon l'une des revendications précédentes, dans lequel les codes binaires sont des données biométriques.

10. Procédé sécurisé selon la revendication précédente, dans lequel les codes binaires sont des images d'iris encodées.

11. Système d'identification d'un individu (I), comportant au moins un serveur de contrôle (SC) d'un individu (I) à identifier, et au moins un serveur de gestion (SG) d'une base (DB) de N données de référence $(b_0...b_{N-1})$ d'individus répertoriés, le serveur de contrôle (SC) étant adapté pour procéder à l'acquisition d'une donnée (b) de l'individu (I), le système étant **caractérisé en ce que** le serveur de contrôle (SC) et le serveur de gestion (SG) comportent des moyens de traitement adaptés pour mettre en oeuvre le procédé sécurisé d'évaluation d'une fonction selon l'une des revendications précédentes entre la donnée (b) de l'individu (I) et au moins une donnée de référence d'individus répertoriés, afin de déterminer les distances de Hamming entre la donnée de l'individu et chaque donnée de référence, et déterminer la donnée de référence $(b_i)$ présentant des similarités avec la donnée (b) de l'individu (I) à identifier excédant un seuil prédéterminé, pour identifier l'individu comme l'individu répertorié dont provient ladite donnée de référence $(b_i)$.

**Patentansprüche**

1. Sicheres Verfahren zur Datenverarbeitung, wobei die Evaluierung einer Funktion (F) durchgeführt wird, die sich wie eine lineare Kombination von Unterfunktionen $(f_i)$ mit zwei binären Inputs schreibt, wobei ein Client (C) und ein Server (S) jeweils einen binären Code Y besitzen, der n indexierte Bits $y_1,...x_n$ umfasst, und einen binären Code X, der n indexierte Bits $x_1,...x_n$ umfasst, wobei das Verfahren die Evaluierung der Funktion (F) mit den binären Codes des Clients Y und des Servers X als Inputs umfasst, ohne dass einer, der Client (C) und der Server (S), die Information über den Code des anderen erhält,
wobei das Verfahren **dadurch gekennzeichnet ist, dass** es die folgenden Schritte umfasst:

a) der Server generiert nach dem Zufallsprinzip n indexierte Werte ($r_i$) und berechnet die lineare Kombination (R) dieser Werte mit derselben linearen Kombination wie der, die auf die Unterfunktionen ($f_i$) angewendet wird, um die Funktion (F) zu erhalten,
b) der Client führt für jedes Bit ($y_i$) seines binären Codes (Y) eine Technik der spontanen Übertragung durch, um vom Server eine Übergangsangabe zu erhalten, die den nach dem Zufallsprinzip generierten Wert ($r_i$) mit demselben Index wie das Bit ($y_i$) des Codes des Clients umfasst, summiert mit dem Wert der entsprechenden Unterfunktion, evaluiert in dem Bit mit demselben Index des Codes des Servers und in dem Bit seines binären Codes ($f_i(x_i,y_i)$), und
c) der Client führt eine lineare Kombination der Übergangsangaben für alle Bits ($y_i$) seines binären Codes mit derselben linearen Kombination wie der auf die Unterfunktionen angewendeten durch, um die Funktion (F) zu erhalten, um ein Endergebnis (RF) zu erhalten, das die lineare Kombination (R) der nach dem Zufallsprinzip generierten Werte ($r_i,...,r_n$), addiert mit der Evaluierung der Funktion in den zwei binären Codes, umfasst.

2. Sicheres Verfahren nach vorangehendem Anspruch, wobei, zwischen Schritt a) und Schritt b) der Server eine dem Code zugeordnete indexierte Einheit von 2-Bit-Bytes ($D_i$) generiert, wobei jedes 2-Bit-Byte einem Bit ($x_i$) mit demselben Index des binären Codes entspricht und in dieser Reihenfolge umfasst:

- die Summe ($r_i + f_i(x_i,0)$) des nach dem Zufallsprinzip generierten Werts ($r_i$) mit demselben Index wie das Bit $x_i$ und der in dem Bit $x_i$ und Null evaluierten Funktion, und
- die Summe ($r_i + f_i(x_i,1)$) des nach dem Zufallsprinzip generierten Werts ($r_i$) mit demselben Index wie das Bit $x_i$ und der in dem Bit $x_i$ und Eins evaluierten Funktion,

und wobei der Client durch spontanen Übertragung für jedes Bit ($y_i$) seines binären Codes das Element des 2-Bit-Bytes ($D_i$) mit demselben Index wie das Bit ($y_i$) des Codes des Clients restauriert, so dass:

- wenn das Bit ($y_i$) des Codes des Clients gleich 0 ist, der Client das erste Element des 2-Bit-Bytes ($D_i$) restauriert, und
- wenn das Bit ($y_i$) des Codes des Clients gleich 1 ist, der Client das zweite Element des 2-Bit-Bytes ($D_i$) restauriert.

3. Sicheres Verfahren nach einem der vorangehenden Ansprüche, das ferner die folgenden Schritte umfasst:

- der Client schickt das Endergebnis (RF) an den Server, und
- der Server zieht vom Endergebnis die lineare Kombination (R) der nach dem Zufallsprinzip generierten Werte ab, um die Evaluierung der Funktion in den binären Codes zu erhalten.

4. Sicheres Verfahren nach einem der Ansprüche 1 oder 2, das ferner die folgenden Schritte umfasst:

- der Server schickt an den Client die lineare Kombination (R) der nach dem Zufallsprinzip generierten Werte, und
- der Server zieht vom Endergebnis (RF) die lineare Kombination der nach dem Zufallsprinzip generierten Werte ab, um die Evaluierung der Funktion in den binären Codes zu erhalten.

5. Sicheres Verfahren nach einem der Ansprüche 2 bis 4, wobei der Server mindestens zwei binäre Codes ($X^1,...,X^N$) von n indexierten Bits besitzt, und

- in Schritt a) der Server so viele Einheiten von Zufallswerten ($r^1_i,...,r^n_i$) generiert, wie er binäre Codes besitzt, und die linearen Kombinationen ($R^1,..., R^N$) der Werte jeder Einheit berechnet,
- der Server so viele indexierte Einheiten von 2-Bit-Bytes ($D_i$) generiert, wie er binäre Codes ($X^1,...,X^N$) besitzt, und die Einheiten von 2-Bit-Bytes verkettet, und
- die vom Client erhaltene Übergangsangabe für alle binären Codes ($X^1,...,X^N$) des Servers die Verkettung der Übergangsangaben, die der Client für jeden binären Code des Servers isoliert erhalten hat, umfasst.

6. Sicheres Verfahren nach einem der vorangehenden Ansprüche, wobei jeder, der Client und der Server, nach mindestens einer Operation, die er durchgeführt hat, eine Information veröffentlicht, aus der der andere entnehmen kann:

- ob die durchgeführte Operation mit dem Protokoll übereinstimmt, und
- ob die Operation für beeinträchtigte Angaben durchgeführt wurde.

7. Sicheres Verfahren nach einem der vorangehenden Ansprüche, wobei die zu evaluierende Funktion der Hamming-Abstand zwischen den binären Codes des Clients und des Servers ist, wobei die Bestimmung des Hamming-Abstands die Bestimmung der Anzahl der Bits mit demselben Index mit unterschiedlichem Wert von einem zum anderen Code umfasst, und wobei:

- in Schritt a) die lineare Kombination der nach dem Zufallsprinzip generierten Werte die Summe der Werte ist,
- in Schritt b) die vom Client für jedes Bit ($y_i$) seines binären Codes restaurierte Übergangsangabe die Summe des nach dem Zufallsprinzip ($r_i$) generierten Werts mit demselben Index wie das Bit ($y_i$) des Codes des Clients und des Ergebnisses der Operation "exklusives Oder" zwischen dem Bit des Codes ($y_i$) des Clients und dem Bit mit demselben Index ($x_i$) des Codes des Server ist, und
- in Schritt c) der Client die Übergangsangaben für alle Bits seines binären Codes summiert, um die Summe der nach dem Zufallsprinzip generierten Angaben, addiert mit dem Hamming-Abstand zwischen den zwei binären Codes (X, Y), zu erhalten.

8. Sicheres Verfahren nach vorangehendem Anspruch, wobei jeder binäre Code des Clients und des Servers ferner einem binären Maskencode (M, M') mit der Größe n zugeordnet wird, dessen Indexe der Einser-Bits ($m_i$) die Indexe der Bits ($x_i$, $y_i$) der Codes des Clients und des Servers angeben, die für die Bestimmung des Hamming-Abstands zu berücksichtigen sind, und

- in Schritt a) der Server nach dem Zufallsprinzip zwei Werteeinheiten ($r_i$, $r'_i$) und ihre jeweiligen Summen (R, R') generiert,
- in Schritt b) die vom Client für jedes Bit ($y_i$) seines binären Codes restaurierte Übergangsangabe zwei Elemente aufweist, von denen:

  o das erste einen nach dem Zufallsprinzip der ersten Einheit generierten Wert (ri) umfasst, addiert mit dem Wert des Schnittpunkts zwischen dem Ergebnis der Operation "exklusives Oder" zwischen dem Bit des Codes des Clients (yi) und dem Bit mit demselben Index des Codes des Servers (xi), und die Werte der entsprechenden Bits der Maskencodes (mi, mi'),
  ∘ das zweite Element der Übergangsangabe für jedes Bit des binären Codes des Clients ($y_i$) einen nach dem Zufallsprinzip generierten Wert der zweiten Einheit ($r'_i$) umfasst, addiert mit dem Schnittpunkt der Werte der entsprechenden Bits der Maskencodes ($m_i$, $m_i'$), und

- in Schritt c) der Client summiert:

  ∘ einerseits die ersten Elemente der Übergangsangaben, um den Wert des Hamming-Abstands zwischen den Codes des Clients und des Servers über die Einser-Bits der Maskencodes, addiert mit der ersten Summe (R) der nach dem Zufallsprinzip generierten Werte, zu erhalten, und
  ∘ andererseits die zweiten Elemente der Übergangsangaben, um die Größe des Schnittpunkts der Maskencodes, addiert mit der zweiten Summe (R') von nach dem Zufallsprinzip generierten Werten, zu erhalten.

9. Sicheres Verfahren nach einem der vorangehenden Ansprüche, wobei die binären Codes biometrische Angaben sind.

10. Sicheres Verfahren nach vorangehendem Anspruch, wobei die binären Codes codierte Irisbilder sind.

11. Identifikationssystem eines Individuums (I), das mindestens einen Kontrollserver (SC) eines zu identifizierenden Individuums (I) und mindestens einen Verwaltungsserver (SG) einer Datenbank (DB) von N Referenzdaten ($b_0$...$b_{N-1}$) erfasster Individuen aufweist,
wobei der Kontrollserver (SC) ausgebildet ist, um die Erfassung einer Angabe (b) des Individuums (I) durchzuführen,
wobei das System **dadurch gekennzeichnet ist, dass** der Kontrollserver (SC) und der Verwaltungsserver (SG) geeignete Verarbeitungsmittel für die Durchführung des sicheren Evaluierungsverfahrens einer Funktion nach einem der vorangehenden Ansprüche zwischen der Angabe (b) des Individuums (I) und mindestens einer Referenzangabe erfasster Individuum aufweisen, um die Hamming-Abstände zwischen der Angabe des Individuums und jeder Referenzangabe zu bestimmen und um die Referenzangabe ($b_i$) zu bestimmen, die Ähnlichkeiten mit der Angabe (b) des zu identifizierenden Individuums (I) hat, über einem bestimmten Grenzwert, um das Individuum als erfasstes Individuum zu identifizieren, von dem die Referenzangabe ($b_i$) ausgeht.

**Claims**

1. A secure method of processing data wherein evaluation of a function (F) described as a linear combination of sub-functions ($f_i$) with two binary inputs is performed, wherein a client (C) and a server (S) respectively have a binary code Y, comprising n indexed bits $y_1,...y_n$, and a binary code X, comprising n indexed bits $x_1,...,x_n$, the method comprising evaluation of the function (F) with the binary codes of the client Y and of the server X as inputs, without either the client (C) or the server (S) obtaining information on the code of the other,
the method being **characterized in that** it comprises the following steps:

   a) the server randomly generates n indexed values ($r_i$) and calculates the linear combination (R) of these values with the same linear combination as that applied to the sub-functions ($f_i$) to obtain the function (F),
   b) for each bit ($y_i$) of its binary code (Y), the client employs a technique of oblivious transfer to obtain from the server an intermediate datum comprising the randomly generated value ($r_i$) of the same index as the bit ($y_i$) of the code of the client, added to the value of the corresponding sub-function evaluated in the bit of the same index of the code of the server and in said bit of its binary code ($f_i(x_i,y_i)$), and
   c) the client performs a linear combination of the intermediate data for all the bits ($y_i$) of its binary code, with the same linear combination as that applied to the sub-functions to obtain the function (F), so as to obtain a final result (RF) comprising the linear combination (R) of randomly generated values ($r_1,...,r_n$) added to evaluation of the function in both binary codes.

2. The secure method according to the preceding claim, wherein, between step a) and step b), the server generates an indexed set of doublets ($D_i$) associated with the code, each doublet corresponding to a bit ($x_i$) of the same index of the binary code, and comprising in this order:

   - the sum ($r_i + f_i(x_i, 0)$) of the randomly generated value ($r_i$) of the same index as the bit and the function evaluated in said bit $x_i$ and zero, and
   - the sum ($r_i + f_i(x_i, 1)$) of the randomly generated value ($r_i$) of the same index as the bit and the function evaluated in said bit $x_i$ and one,

   and wherein the client retrieves by oblivious transfer, for each bit ($y_i$) of its binary code, the element of the doublet ($D_i$) of the same index as the bit ($y_i$) of the code of the client such that:

   - if the bit ($y_i$) of the code of the client is equal to 0, the client retrieves the first element of the doublet ($D_i$), and
   - if the bit ($y_i$) of the code of the client is equal to 1, the client retrieves the second element of the doublet ($D_i$).

3. The secure method according to any one of the preceding claims, further comprising the following steps:

   - the client sends to the server the final result (RF), and
   - the server subtracts from the final result the linear combination (R) of randomly generated values to obtain evaluation of the function in the binary codes.

4. The secure method according to any one of Claims 1 or 2, further comprising the following steps:

   - the server sends to the client the linear combination (R) of the randomly generated values, and
   - the client subtracts from the final result (RF) the linear combination of the randomly generated values to obtain evaluation of the function in the binary codes.

5. The secure method according to any one of Claims 2 to 4, wherein the server has at least two binary codes ($X^1,...,X^N$) of n indexed bits, and

   - during step a), the server generates as many sets of random values ($r^1_i,...,r^n_i$) as it has binary codes and calculates the linear combinations ($R^1,...,R^N$) of the values of each set,
   - the server generates as many indexed sets of doublets ($D_i$) as it has binary codes ($X^1,...,X^N$), and concatenates said sets of doublets, and
   - the intermediate datum obtained by the client comprises concatenation, for all the binary codes ($X^1,...,X^N$) of

the server, of the intermediate data which the client would have obtained separately for each binary code of the server.

6. The secure method according to any one of the preceding claims, wherein each of the client and of the server publishes, after at least one operation carried out, information from which the other can detect:

   - if the operation used complies with protocol, and if
   - the operation has been used on corrupt data.

7. The secure method according to any one of the preceding claims, wherein the function to be evaluated is the Hamming distance between the binary codes of client and server, with determination of the Hamming distance comprising determination of the number of bits of the same index whereof the value differs from one code to the other, and wherein:

   - during step a) the linear combination of randomly generated values is the sum of said values,
   - during step b) the intermediate datum retrieved by the client for each bit ($y_i$) of its binary code is the sum of the randomly generated value ($r_i$) from the same index as the bit ($y_i$) of the code of the client, and from the result of the operation "or exclusive" between the bit of the code ($y_i$) of the client and the bit of the same index ($x_i$) of the code of the server, and
   - during step c) the client totals the intermediate data for all bits of its binary code to obtain the sum of the data randomly generated added to the Hamming distance between the two binary codes (X,Y).

8. The secure method according to the preceding claim, wherein each binary code of the client and of the server is also associated with a binary mask code (M, M') of size n, whereof the index of the bits ($m_i$) at 1 indicate the index of the bits ($x_i$, $y_i$) of codes of the client and of the server to be considered for determination of the Hamming distance, and

   - during step a) the server randomly generates two sets of values ($r_i$, $r'_i$) and their respective sums (R, R'),
   - during step b) the intermediate datum retrieved by the client for each bit ($y_i$) of its binary code comprises two elements, whereof:

      o The first comprises a value ($r_i$) randomly generated from the first set, added to the value of the intersection between the result of the operation "or exclusive" between the bit of the code of the client ($y_i$) and the bit of the same index of the code of the server ($x_i$), and the values of the corresponding bits of the mask codes ($m_i$, $m'_i$),
      ∘ the second element of the intermediate datum for each bit of the binary code of the client ($y_i$) comprises a randomly generated value from the second set ($r'_i$) added to the intersection of the values of the corresponding bits of the mask codes ($m_i$, $m'_i$), and

   - during step c), the client sums:

      ∘ on the one hand, the first elements of the intermediate data to obtain the value of the Hamming distance between the codes of the client and the server on the bits at 1 of the mask codes added to the first sum (R) of the randomly generated values, and
      ∘ on the other hand, the second elements of the intermediate data, to obtain the size of the intersection of the mask codes added to the second sum (R') of randomly generated values.

9. The secure method according to any one of the preceding claims, wherein the binary codes are biometric data.

10. The secure method according to the preceding claim, wherein the binary codes are encoded iris images.

11. A system for identification of an individual (I), comprising at least one control server (SC) of an individual (I) to be identified, and at least one administration server (SG) of a base (DB) of N reference data ($b_0...b_{N-1}$) of listed individuals, the control server (SC) being adapted to proceed with acquisition of a datum (b) of the individual (I), the system being **characterized in that** the control server (SC) and the administration server (SG) comprise processing means adapted to execute the secure method for evaluation of a function according to any one of the preceding claims between the datum (b) of the individual (I) and at least one reference datum of listed individuals to determine the Hamming distances between the datum of the individual and each reference datum, and determine the reference

datum (b$_i$) having similarities with the datum (b) of the individual (I) to be identified exceeding a predetermined threshold, to identify the individual as the listed individual from which said reference datum originates (b$_i$).

Fig. 1a

Fig. 1b

Fig. 1c

100 — Génération valeurs aléatoires

200 — Génération ensemble indexé pour transfert inconscient

300 — Récupération données intermédiaires par transfert inconscient

400 — Sommation des données intermédiaires

Déduction distance de Hamming par le serveur

Déduction distance de Hamming par le client

500

510

Fig. 2

Code X,Y $\begin{bmatrix} 100111\ldots \\ \ldots 1100110 \end{bmatrix}$ $\begin{bmatrix} 1110001\ldots \\ \ldots \qquad 011 \end{bmatrix}$ Masque M, M'

Fig. 3

Fig. 4a

Fig. 4b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1162058

**Littérature non-brevet citée dans la description**

- **JOHN DAUGMAN.** How iris recognition works. *IEEE Transactions on circuits and systems for video technology,* Janvier 2004, vol. 14 (1
- **M. BLANTON ; P. GASTI.** Secure and Efficient Protocols for Iris and Fingerprint Identification. *ESORICS,* 2011, 190-209
- **MEHMET S. KIRAZ ; BERRY SCHOENMAKERS ; JOSÉ VILLEGAS.** Efficient Committed Oblivious Transfer of Bit Strings. *ISC,* 2007, 130-144